# EUROPEAN PATENT APPLICATION

(11) **EP 4 364 984 A1**
(43) Date of publication of application: **08.05.2024**
(21) Application number: 22852648.9
(22) Date of filing: 30.05.2022
(51) Int. Cl.: B60H 1/00, B60H 1/32

(54) **INSULATION, EVAPORATOR STRUCTURE, CUTTING DIE, AND METHOD FOR PRODUCING INSULATION**

(30) Priority: 02.08.2021 JP 2021126439
(71) Applicant: MITSUBISHI HEAVY INDUSTRIES THERMAL SYSTEMS, LTD., Tokyo 100-8332 (JP)
(72) Inventor: TAKEZAWA, Hideyuki, Tokyo 100-8332 (JP)
(74) Representative: Cabinet Beau de Loménie
(86) International application number: PCT/JP2022/021970
(87) International publication number: WO 2023/013220

(57) **Abstract**

Provided is an insulation that has a simple shape and is produced without waste of material, an evaporator structure, a cutting die, and a method for producing the insulation. An insulation (30) provided at an evaporator of a vehicular air conditioning device includes a rectangular strip portion (31) extending in a predetermined direction, a pair of rectangular first wing portions (32) each protruding in an intersecting direction orthogonal to the predetermined direction from a corresponding one of long sides (31c, 31d) of the strip portion (31) at one end (31a) of the strip portion (31), and a pair of rectangular second wing portions (33) each protruding in the intersecting direction orthogonal to the predetermined direction from the corresponding one of the long sides (31c, 31d) of the strip portion (31) at a position closer to another end (31b) of the strip portion (31) than to the one end (31a).

## Description

### Technical Field

The present disclosure relates to an insulation, an evaporator structure and a cutting die, and a method for producing the insulation.

### Background Art

In an evaporator mounted at a vehicular air conditioning device (heating ventilation and air conditioning unit (HVAC)), wind needs to be blocked by filling a gap formed between the evaporator and a casing with an insulation for improvement in heat exchange efficiency (for example, Patent Document 1).

In addition, front, rear, left, and right portions of the evaporator need to be firmly fixed to the casing so that the evaporator does not vibrate.

### Citation List

### Patent Literature

Patent Document 1: WO 2015/079958

### Summary of Invention

### Technical Problem

When different insulations block wind at the peripheral surfaces (surfaces other than the front surface and the rear surface) of the evaporator, a lot of time and effort are taken for removal of release paper of the insulations, pasting of the insulations, removal of waste, and the like, which can increase working cost.

On the other hand, integrating the insulations can reduce the number of components but may complicate the shape. When the shape is complicated, the number of pieces obtained with a cutting die tends to decrease (in other words, a portion to be removed as waste increases), which can increase material cost.

The present disclosure has been made in view of such circumstances, and an object of the present disclosure is to provide an insulation that has a simple shape and is produced without waste of material, an evaporator structure, a cutting die, and a method for producing the insulation.

### Solution to Problem

In order to solve the above problem, an insulation, an evaporator structure, a cutting die, and a method for producing the insulation according to the present disclosure employ the following means.

An insulation according to an aspect of the present disclosure is an insulation provided at an evaporator of a vehicular air conditioning device, the insulation including a strip portion having a rectangular shape and extending in a predetermined direction, a pair of first wing portions, each of the pair of first wing portions having a rectangular shape and protruding in an intersecting direction orthogonal to the predetermined direction from a corresponding one of long sides of the strip portion at one end of the strip portion, and a pair of second wing portions, each of the pair of second wing portions having a rectangular shape and protruding in the intersecting direction orthogonal to the predetermined direction from the corresponding one of the long sides of the strip portion at a position closer to another end of the strip portion than to the one end.

An evaporator structure according to another aspect of the present disclosure includes an evaporator including a top surface and a side surface adjacent to and orthogonal to the top surface, and the above insulation, in which the pair of first wing portions, the pair of second wing portions, and a portion of the strip portion from the pair of first wing portions to the pair of second wing portions are disposed at the top surface of the evaporator, and a portion of the strip portion closer to the other end than the pair of second wing portions are to the other end is disposed at the side surface of the evaporator.

A cutting die according to still another aspect of the present disclosure includes a plurality of first cutting teeth, each of the plurality of first cutting teeth following a contour of a shape obtained by integrating a strip portion, a pair of first wing portions, and a pair of second wing portions, the strip portion having a rectangular shape and extending in a predetermined direction, each of the pair of first wing portions having a rectangular shape and protruding in an intersecting direction orthogonal to the predetermined direction from a corresponding one of long sides of the strip portion at one end of the strip portion, each of the pair of second wing portions having a rectangular shape and protruding in the intersecting direction orthogonal to the predetermined direction from the corresponding one of the long sides of the rectangular shape at a position closer to another end of the strip portion than to the one end, and a plurality of second cutting teeth, each of the plurality of second cutting teeth following a rectangular contour extending in the predetermined direction between a corresponding one of the pair of first wing portion and a corresponding one of the pair of the second wing portion.

A method for producing an insulation according to still another aspect of the present disclosure includes pressing the above cutting die against a sheet-like insulation material.

### Advantageous Effects of Invention

According to the present disclosure, it is possible to provide an insulation that has a simple shape and is produced without waste of material.

### Brief Description of Drawings

FIG. 1 is a perspective view of a vehicular air conditioning device including an evaporator structure according to an embodiment of the present disclosure.
FIG. 2 is a perspective view of a front surface of the evaporator structure according to the embodiment of the present disclosure.
FIG. 3 is a perspective view of a rear surface of the evaporator structure according to the embodiment of the present disclosure.
FIG. 4 is a front view of the evaporator structure according to the embodiment of the present disclosure.
FIG. 5 is an exploded plan view of a first insulation according to the embodiment of the present disclosure.
FIG. 6 is an exploded plan view of a second insulation according to the embodiment of the present disclosure.
FIG. 7 is a view illustrating a combination of a first cutting tooth and a second cutting tooth included in a cutting die according to the embodiment of the present disclosure.
FIG. 8 is a view illustrating Arrangement Example 1 of the combination of the first cutting tooth and the second cutting tooth.
FIG. 9 is a view illustrating Arrangement Example 2 of the combination of the first cutting tooth and the second cutting tooth.
FIG. 10 is a view illustrating Arrangement Example 3 of the combination of the first cutting tooth and the second cutting tooth.

### Description of Embodiments

Hereinafter, an insulation, an evaporator structure, a cutting die, and a method for producing the insulation according to an embodiment of the present disclosure will be described with reference to the drawings.

### Regarding Vehicular Air Conditioning Device

The configuration of a vehicular air conditioning device 1 will be described first.

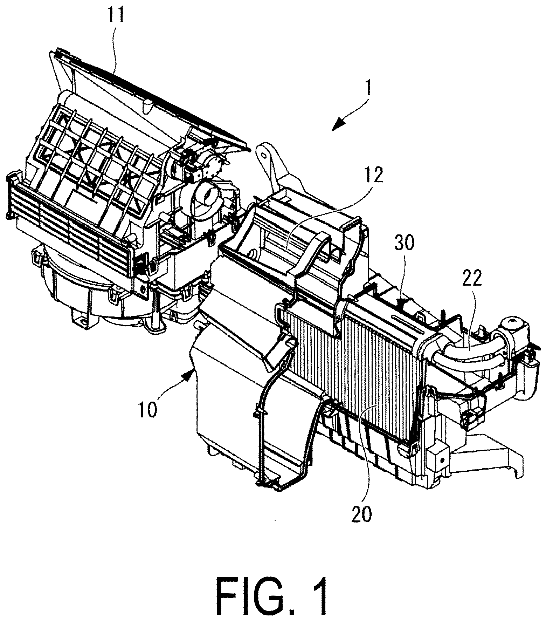

As illustrated in FIG. 1, the vehicular air conditioning device 1 includes a casing 10 that accommodates equipment such as a fan (not illustrated) and an evaporator 20.

Note that, in the vehicular air conditioning device 1 illustrated in FIG. 1, the casing 10 is partially omitted and the evaporator 20 is exposed for the sake of description.

The casing 10 includes an air intake port 11 and an air discharge port 12.

The air intake port 11 is an opening through which air is taken into the casing 10 from the outside of the casing 10.

The air discharge port 12 is an opening for discharging air heat-exchanged by the evaporator 20 to the outside of the casing 10.

The flow of air from the air intake port 11 to the air discharge port 12 is formed by the fan (not illustrated).

### Regarding Evaporator Structure

Next, an evaporator structure including the evaporator 20 and insulations (a first insulation 30 and a second insulation 40) will be described.

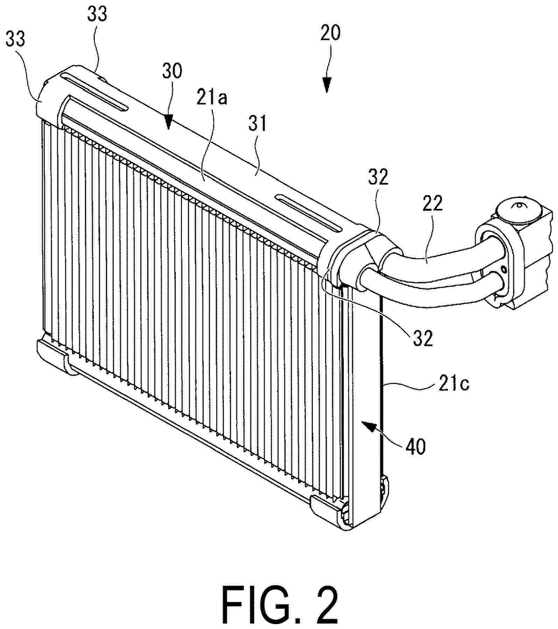

As illustrated in FIGS. 1 and 2, the evaporator 20 is a device (heat exchanger) for exchanging heat between a refrigerant and air, as is known.

A pipe 22 is coupled to the evaporator 20, and the evaporator 20 is configured such that a refrigerant supplied through the pipe 22 exchanges heat with air.

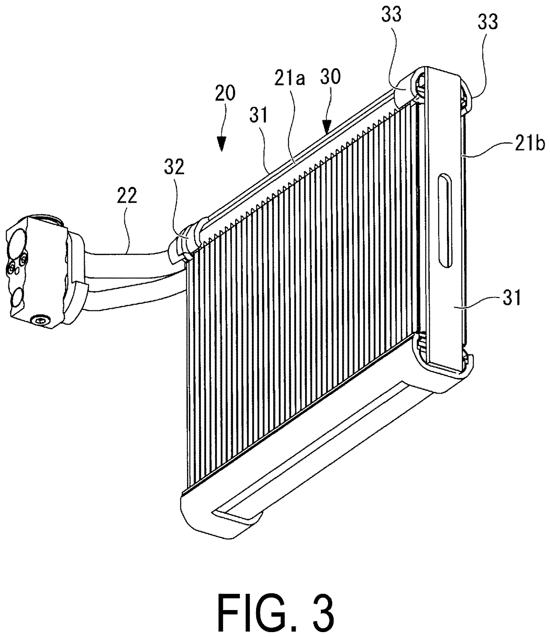

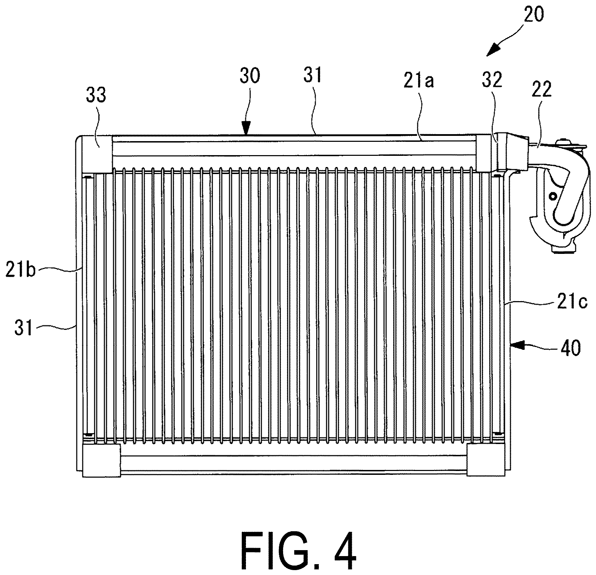

As illustrated in FIGS. 2 to 4, the evaporator 20 according to the present embodiment has a cuboid outer shape having a rectangular shape in a front view and a predetermined depth dimension. In this case, a surface to which the pipe 22 is coupled is referred to as a top surface 21a, and respective surfaces adjacent to and orthogonal to the top surface 21a are referred to as side surfaces 21b and 21c. The side surface 21b and the side surface 21c face each other.

Sheet-like members called insulations are provided at the top surface 21a, the side surface 21b, and the side surface 21c. Specifically, the insulations are bonded to the top surface 21a, the side surface 21b, and the side surface 21c with, for example, glue or double-sided tapes.

The insulations are produced by performing die cutting of a sheet (insulation material 70) having wind blocking properties and made of, for example, polyethylene, polyurethane, or ethylene propylene diene rubber (EPDM). Details thereof will be described below.

A gap formed between the evaporator 20 and the casing 10 is filled with the insulations and thus the insulations exert a function of blocking wind (suppressing air leakage) and firmly fixing the evaporator 20 to the casing 10 to suppress vibration.

In the present embodiment, the insulations include a first insulation 30 and a second insulation 40.

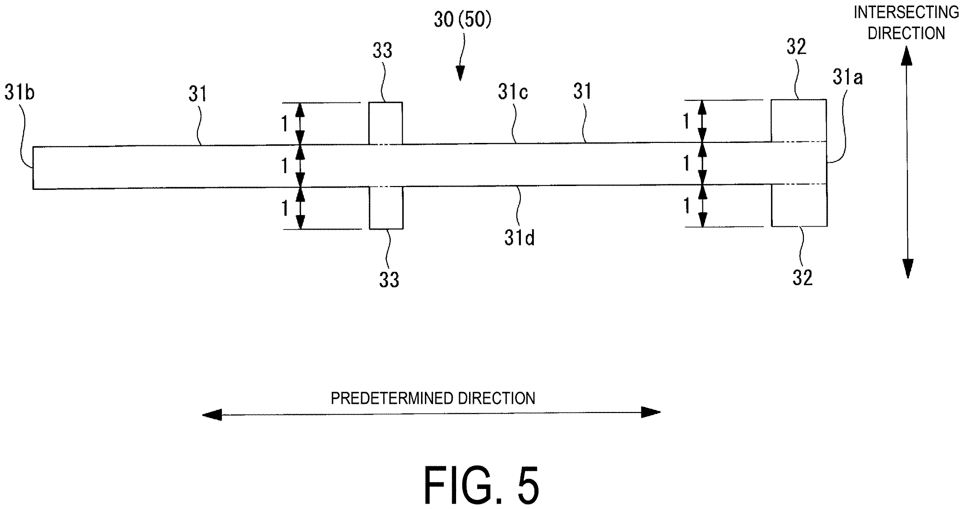

As illustrated in FIG. 5, the first insulation 30 includes a strip portion 31, first wing portions 32, and second wing portions 33.

The strip portion 31 is a rectangular portion including one end 31a and another end 31b and extending in a predetermined direction.

Each of the first wing portions 32 is a rectangular portion that protrudes from a corresponding one of long sides 31c and 31d of the strip portion 31 in a direction orthogonal to the predetermined direction (hereinafter, simply referred to as an "intersecting direction") at the one end 31a of the strip portion 31.

The first wing portions 32 on the long side 31c and the long side 31d of the strip portion 31 are paired and preferably have shapes symmetrical with respect to the strip portion 31.

Each of the second wing portions 33 is a rectangular portion that protrudes from the corresponding one of the long sides 31c and 31d of the strip portion 31 in the intersecting direction at a position closer to the other end 31b of the strip portion 31 than to the one end 31a (for example, a central portion of the strip portion 31).

The second wing portions 33 on the long side 31c and the long side 31d of the strip portion 31 are paired and preferably have shapes symmetrical with respect to the strip portion 31.

When each first wing portion 32 and each second wing portion 33 are compared with each other, the protruding lengths from the long side 31c and the long side 31d of the strip portion 31 are equal to each other, and the dimension of the first wing portion 32 in the predetermined direction is longer than that of the second wing portion 33 in the predetermined direction.

In addition, when the strip portion 31 and each first wing portion 32 are compared with each other, the dimensions in the intersecting direction (the width dimension of the strip portion 31 and the protruding length of the first wing portion 32) are equal to each other. That is, the protruding length of one of the first wing portions 32, the width dimension of the strip portion 31, and the protruding length of another of the first wing portions 32 have a relationship of 1:1:1.

The same also applies to the relationship between the strip portion 31 and the second wing portions 33.

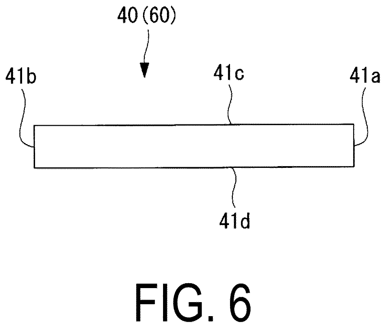

As illustrated in FIG. 6, the second insulation 40 is a rectangular portion extending in the predetermined direction and including one end 41a and another end 41b. The respective long sides of the second insulation 40 are referred to as long sides 41c and 41d.

The dimension (width dimension) of the second insulation 40 in the intersecting direction is equal to the protruding length of the first wing portion 32 and the protruding length of the second wing portion 33.

The first insulation 30 and the second insulation 40 configured as described above are disposed at the evaporator 20 as follows.

As illustrated in FIGS. 2 to 4, the first insulation 30 is disposed at the top surface 21a and the side surface 21b of the evaporator 20.

Specifically, the first wing portions 32, the second wing portions 33, and a portion of the strip portion 31 from the first wing portions 32 to the second wing portions 33 are disposed at the top surface 21a of the evaporator 20. In addition, a portion of the strip portion 31 closer to the other end 31b than the second wing portions 33 are to the other end 31b is disposed at the side surface 21b of the evaporator 20 so as to be bent with respect to the top surface 21a.

At this time, as illustrated in FIG. 2, the first wing portions 32 and a portion of the strip portion 31 in the vicinity of the first wing portions 32 are disposed so as to wrap an end portion of the pipe 22.

As illustrated in FIGS. 2 to 4, the second insulation 40 is disposed at the side surface 21c of the evaporator 20.

In the above manner, the evaporator structure including the evaporator 20 and the insulations (the first insulation 30 and the second insulation 40) is configured.

### Method for Producing Insulations

The first insulation 30 and the second insulation 40 are produced by being cut out from the insulation material 70 with a cutting die.

Specifically, by pressing a cutting tooth of the cutting die called a Thomson die against the sheet-like insulation material 70, an insulation having a shape corresponding to the contour of the cutting tooth is punched out and produced.

The Thomson die includes a first cutting tooth 50 following the contour of the shape of the first insulation 30 as illustrated in FIG. 5. The Thomson die also includes a second cutting tooth 60 following the contour of the shape of the second insulation 40 as illustrated in FIG. 6.

Each of the first cutting tooth 50 and the second cutting tooth 60 forms a closed region. The contour of the region corresponds to the contour of the shape of each of the insulations 30 and 40.

In the present embodiment, the shapes of the first insulation 30 and the second insulation 40 and the arrangements of the first cutting tooth 50 and the second cutting tooth 60 are devised so that the two types of insulations can be produced without waste of material.

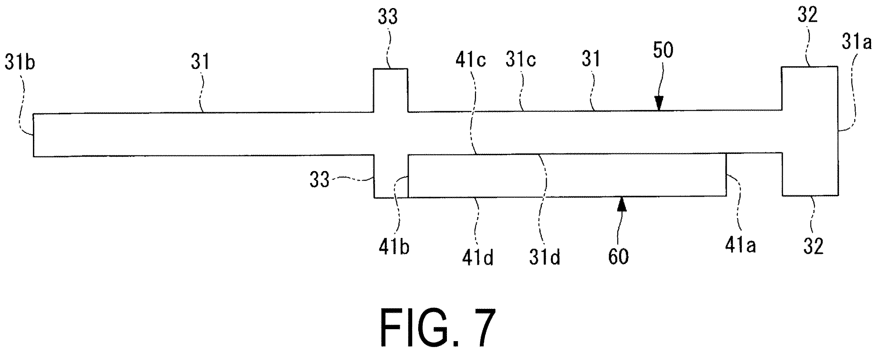

First, as a premise, the second cutting tooth 60 is disposed between one of portions corresponding to the first wing portions 32 and a corresponding one of portions corresponding to the second wing portions 33 in the first cutting tooth 50, as illustrated in FIG. 7.

At this time, one of the long sides (here, the long side 31d) of the first cutting tooth 50 and one of the long sides (here, the long side 41c) of the second cutting tooth 60 are shared (in other words, the cutter is shared). Moreover, as described above, the width dimension of the second insulation 40 is equal to the protruding length of each first wing portion 32 and the protruding length of each second wing portion 33.

Thus, it is possible to efficiently dispose the second cutting tooth 60 using a region between the one of the portions corresponding to the first wing portions 32 and the corresponding one of the portions corresponding to the second wing portions 33 in the first cutting tooth 50.

In addition, the side corresponding to the other end 41b of the second cutting tooth 60 and the side corresponding to the one of the second wing portions 33 of the first cutting tooth 50 are shared, and thus it is possible to more efficiently dispose the cutter.

Further, by devising the arrangement of the set of the first cutting tooth 50 and the second cutting tooth 60 combined as described above, the two types of insulations can be produced in large quantities at a time without waste of material.

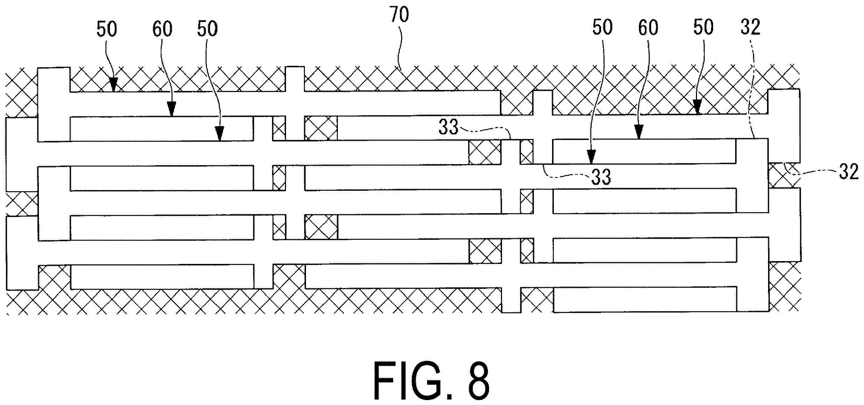

Arrangement examples thereof will be described below with reference to FIGS. 8 to 10.

Note that cross-hatched regions illustrated in FIGS. 8 to 10 are remaining portions of the insulation material 70 (in other words, portions to be wasted). FIGS. 8 to 10 illustrate mere examples, and adoption of other forms is not prevented.

### Arrangement Example 1

As illustrated in FIG. 8, one of portions corresponding to the first wing portions 32 in one first cutting tooth 50 is disposed between a corresponding one of portions corresponding to the first wing portions 32 and a corresponding one of portions corresponding to the second wing portions 33 in another first cutting tooth 50.

At this time, the one of the portions corresponding to the first wing portions 32 in the one first cutting tooth 50 is disposed so as to share sides with the corresponding one of the portions corresponding to the first wing portions 32 and a portion corresponding to the strip portion 31 in the other first cutting tooth 50.

In addition, the second cutting tooth 60 is disposed between the one of the portions corresponding to the first wing portions 32 in the one first cutting tooth 50 and the corresponding one of the portions corresponding to the second wing portions 33 in the other first cutting tooth 50.

At this time, the second cutting tooth 60 is disposed so as to share sides with a portion corresponding to the strip portion 31 in the one first cutting tooth 50 and the portion corresponding to the strip portion 31 in the other first cutting tooth 50.

Furthermore, the dimensions of the second cutting tooth 60 are set such that the second cutting tooth 60 shares sides with the one of the portions corresponding to the first wing portions 32 in the one first cutting tooth 50 and the corresponding one of the portions corresponding to the second wing portions 33 in the other first cutting tooth 50. Thus, the entire region between the one of the portions corresponding to the first wing portions 32 in the one first cutting tooth 50 and the corresponding one of the portions corresponding to the second wing portions 33 in the other first cutting tooth 50 can be used for the second insulation 40. That is, the second cutting tooth 60 is naturally formed by the arrangement of the two first cutting teeth 50.

The plurality of first cutting teeth 50 are disposed in parallel in the intersecting direction according to the same rule, and furthermore, the plurality of first cutting teeth 50 are symmetrically disposed in the predetermined direction such that portions corresponding to the second wing portions 33 in the first cutting teeth 50 face each other in a staggered manner and such that portions corresponding to the strip portions 31 closer to the other ends 31b than the second wing portions 33 are to the other ends 31b are engaged with each other. Thus, the form illustrated in FIG. 8 is obtained.

### Arrangement Example 2

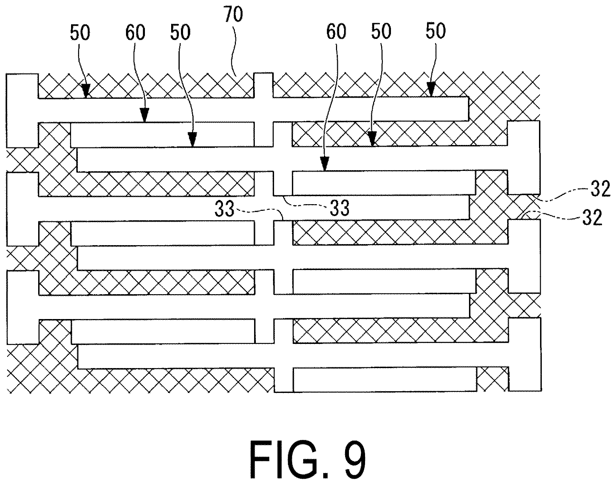

As illustrated in FIG. 9, the plurality of first cutting teeth 50 are disposed in parallel in the intersecting direction.

At this time, portions corresponding to the first wing portions 32 in one first cutting tooth 50 and portions corresponding to the first wing portions 32 in another first cutting tooth 50 are disposed so as to be separated from each other by a distance equal to the width dimension of the strip portion 31 in the intersecting direction. In addition, portions corresponding to the second wing portions 33 in the one first cutting tooth 50 and portions corresponding to the second wing portions 33 in the other first cutting tooth 50 are disposed so as to be separated from each other by a distance equal to the width dimension of the strip portion 31 in the intersecting direction.

In addition, the plurality of first cutting teeth 50 are disposed in parallel in the intersecting direction according to the same rule, and furthermore, the plurality of first cutting teeth 50 are symmetrically disposed in the predetermined direction such that portions corresponding to the second wing portions 33 in the first cutting teeth 50 face each other in a staggered manner so as to share sides. Thus, the form illustrated in FIG. 9 is obtained.

### Arrangement Example 3

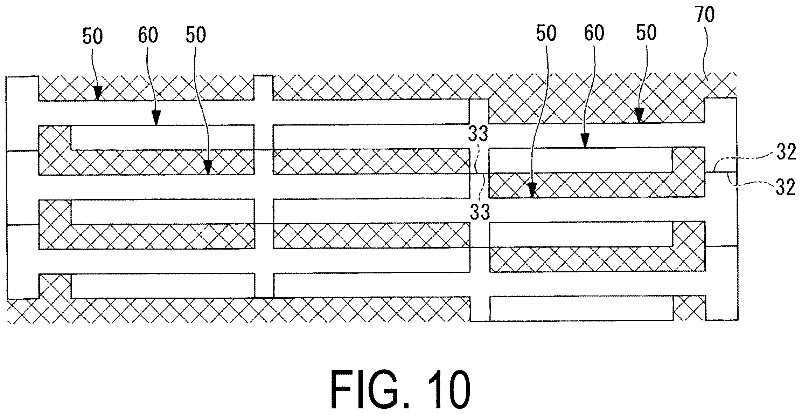

As illustrated in FIG. 10, the plurality of first cutting teeth 50 are disposed in parallel in the intersecting direction.

At this time, portions corresponding to the first wing portions 32 in one of the first cutting teeth 50 and portions corresponding to the first wing portions 32 in another of the first cutting teeth 50 are disposed so as to share a side. In addition, portions corresponding to the second wing portions 33 in the one first cutting tooth 50 and portions corresponding to the second wing portions 33 in the other first cutting tooth 50 are disposed so as to share a side.

In addition, the plurality of first cutting teeth 50 are disposed in parallel in the intersecting direction according to the same rule, and furthermore, the plurality of first cutting teeth 50 are symmetrically disposed in the predetermined direction such that portions corresponding to the second wing portions 33 in the first cutting teeth 50 face each other in a staggered manner and such that portions corresponding to the strip portions 31 closer to the other ends 31b than the second wing portions 33 are to the other ends 31b are engaged with each other. Thus, the form illustrated in FIG. 10 is obtained.

According to the present embodiment, the following effects are obtained.

The first insulation 30 includes the rectangular strip portion 31 extending in the predetermined direction, the pair of rectangular first wing portions 32 each protruding in the intersecting direction from a corresponding one of the long sides of the strip portion 31 at the one end 31a of the strip portion 31, and the pair of rectangular second wing portions 33 each protruding in the intersecting direction from the corresponding one of the long sides of the strip portion 31 at a position closer to the other end 31b of the strip portion 31 than to the one end 31a. Thus, the first wing portions 32, the second wing portions 33, and the portion of the strip portion 31 from the first wing portions 32 to the second wing portions 33 can be disposed at the top surface 21a of the evaporator 20, and the portion of the strip portion 31 closer to the other end 31b than the second wing portions 33 are to the other end 31b can be disposed at the side surface 21b of the evaporator 20. That is, the two surfaces 21a and 21b of the evaporator 20 can be covered with the first insulation 30.

When the first insulation 30 is produced by die cutting, the second insulation 40 can be produced by using a region between a corresponding one of the first wing portions 32 and a corresponding one of the second wing portions 33. Thus, the two types of insulations having simple shapes can be produced without waste of material.

Further, the first wing portions 32 and the second wing portions 33 are provided symmetrically with respect to the strip portion 31.

Further, the protruding length of each first wing portion 32 and the protruding length of each second wing portion 33 are set to be equal to the width dimension of the strip portion 31. Thus, when the second insulation 40 is produced using the region between the corresponding one of the first wing portions 32 and the corresponding one of the second wing portions 33, the width dimension of the strip portion 31 of the first insulation 30 and the width dimension of the second insulation 40 can be made equal to each other. This can improve yield in producing the first insulation 30 and the second insulation 40.

In addition, the first insulation 30 can be produced with the first cutting tooth 50, and the second insulation 40 can produced with the second cutting tooth 60.

Examples of the cutting die include a Thomson die.

In addition, the second cutting tooth 60 is disposed between the corresponding one of portions corresponding to the first wing portions 32 and the corresponding one of portions corresponding to the second wing portions 33 in the first cutting tooth 50, and the second cutting tooth 60 shares a side with a portion corresponding to the strip portion 31 in the first cutting tooth 50. Thus, the second cutting tooth 60 can be efficiently disposed using the region between the corresponding one of the first wing portions 32 and the corresponding one of the second wing portions 33. Thus, the two types of insulations can be produced without waste of material.

In addition, by appropriately disposing the set of the first cutting tooth 50 and the second cutting tooth 60, the two types of insulations can be produced without waste of material.

In addition, since a step of pressing the cutting die against the sheet-like insulation material 70 is included, the first insulation 30 and the second insulation 40 can be produced by a simple method.

The present embodiment described above is understood as follows, for example.

An insulation (30) according to an aspect of the present disclosure is an insulation provided at an evaporator (20) of a vehicular air conditioning device (1), the insulation including a strip portion (31) having a rectangular shape and extending in a predetermined direction, a pair of first wing portions (32), each of the pair of first wing portions having a rectangular shape and protruding in an intersecting direction orthogonal to the predetermined direction from a corresponding one of long sides of the strip portion at one end (31a) of the strip portion, and a pair of second wing portions (33), each of the pair of second wing portions having a rectangular shape and protruding in the intersecting direction orthogonal to the predetermined direction from the corresponding one of the long sides of the strip portion at a position closer to another end (31b) of the strip portion than to the one end.

The insulation according to the present aspect includes the strip portion having a rectangular shape and extending in the predetermined direction, the pair of first wing portions, each of the pair of first wing portions having a rectangular shape and protruding in the intersecting direction orthogonal to the predetermined direction from the corresponding one of the long sides of the strip portion at the one end of the strip portion, and the pair of second wing portions, each of the pair of second wing portions having a rectangular shape and protruding in the intersecting direction orthogonal to the predetermined direction from the corresponding one of the long sides of the strip portion at the position closer to the other end of the strip portion than to the one end. Thus, the pair of first wing portions, the pair of second wing portions, and a portion of the strip portion from the pair of first wing portions to the pair of second wing portions can be disposed at a top surface (21a) of the evaporator, and a portion of the strip portion closer to the other end than the pair of second wing portions are to the other end can be disposed at a side surface (21b) of the evaporator. Thus, the two surfaces of the evaporator can be covered with this insulation.

When the insulation is produced by die cutting, another insulation (40) to be disposed at another side surface of the evaporator can be produced using a region between a corresponding one of the pair of first wing portions and a corresponding one of the pair of second wing portions. Thus, the two types of insulations having simple shapes can be produced without waste of material.

In an insulation according to another aspect of the present disclosure, a protruding length of one of the pair of first wing portions in the intersecting direction is set to be equal to a protruding length of another of the pair of first wing portions in the intersecting direction, and a protruding length of one of the pair of second wing portions in the intersecting direction is set to be equal to a protruding length of another of the pair of second wing portions in the intersecting direction.

According to the insulation of the present aspect, the protruding length of the one of the pair of first wing portions in the intersecting direction is set to be equal to the protruding length of the other of the pair of first wing portions in the intersecting direction, and the protruding length of the one of the pair of second wing portions in the intersecting direction is set to be equal to the protruding length of the other of the pair of second wing portions in the intersecting direction. Thus, the pair of first wing portions and the pair of second wing portions can be provided symmetrically with respect to the strip portion.

In an insulation according to still another aspect of the present disclosure, a protruding length of each of the pair of first wing portions from the strip portion and a protruding length of each of the pair of second wing portions from the strip portion are set to be equal to a width dimension of the strip portion in the intersecting direction.

According to the insulation of the present aspect, the protruding length of each of the pair of first wing portions from the strip portion and the protruding length of each of the pair of second wing portions from the strip portion are set to be equal to the width dimension of the strip portion in the intersecting direction. Thus, when another insulation to be disposed at another side surface of the evaporator is produced using a region between a corresponding one of the pair of first wing portions and a corresponding one of pair of the second wing portions, the width dimension of the strip portion of the insulation can be made equal to the width dimension of the other insulation. This can improve yield in producing the insulation and the other insulation.

An evaporator structure according to still another aspect of the present disclosure includes an evaporator including a top surface and a side surface adjacent to and orthogonal to the top surface, and the insulation according to any of the above, in which the pair of first wing portions, the pair of second wing portions, and a portion of the strip portion from the pair of first wing portions to the pair of second wing portions are disposed at the top surface of the evaporator, and a portion of the strip portion closer to the other end than the pair of second wing portions are to the other end is disposed at the side surface of the evaporator.

The evaporator structure according to the present aspect includes the evaporator including the top surface and the side surface adjacent to and orthogonal to the top surface, and the insulation according to any of the above, in which the pair of first wing portions, the pair of second wing portions, and the portion of the strip portion from the pair of first wing portions to the pair of second wing portions are disposed at the top surface of the evaporator, and the portion of the strip portion closer to the other end than the pair of second wing portions are to the other end is disposed at the side surface of the evaporator. Thus, a predetermined two surfaces of the evaporator can be covered with the insulation having a simple shape.

A cutting die according to still another aspect of the present disclosure includes a plurality of first cutting teeth (50), each of the plurality of first cutting teeth following a contour of a shape obtained by integrating a strip portion, a pair of first wing portions, and a pair of second wing portions, the strip portion having a rectangular shape and extending in a predetermined direction, each of the pair of first wing portions having a rectangular shape and protruding in an intersecting direction orthogonal to the predetermined direction from a corresponding one of long sides of the strip portion at one end of the strip portion, each of the pair of second wing portions having a rectangular shape and protruding in the intersecting direction orthogonal to the predetermined direction from the corresponding one of the long sides of the rectangular shape at a position closer to another end of the strip portion than to the one end, and a plurality of second cutting teeth (60), each of the plurality of second cutting teeth following a rectangular contour extending in the predetermined direction between a corresponding one of the pair of first wing portion and a corresponding one of the pair of the second wing portion.

The cutting die according to the present aspect includes the plurality of first cutting teeth, each of the plurality of first cutting teeth following the contour of the shape obtained by integrating the strip portion, the pair of first wing portions, and the pair of second wing portions, the strip portion having a rectangular shape and extending in the predetermined direction, each of the pair of first wing portions having a rectangular shape and protruding in the intersecting direction orthogonal to the predetermined direction from the corresponding one of long sides of the strip portion at the one end of the strip portion, each of the pair of second wing portions having a rectangular shape and protruding in the intersecting direction orthogonal to the predetermined direction from the corresponding one of the long sides of the rectangular shape at the position closer to the other end of the strip portion than to the one end, and the plurality of second cutting teeth, each of the plurality of second cutting teeth following a rectangular contour extending in the predetermined direction between the corresponding one of the pair of first wing portion and the corresponding one of the pair of the second wing portion. Thus, the insulation for covering the top surface and one side surface of the evaporator can be produced with each first cutting tooth, and another insulation for covering another side surface of the evaporator can be produced with each second cutting tooth.

Examples of the cutting die include a Thomson die.

In addition, in a cutting die according to still another aspect of the present disclosure, each of the plurality of second cutting teeth is disposed between a corresponding one of portions corresponding to the pair of first wing portions and a corresponding one of portions corresponding to the pair of second wing portions in a corresponding one of the plurality of first cutting teeth, and each of the plurality of second cutting teeth shares a side with a portion corresponding to the strip portion in the corresponding one of the plurality of first cutting teeth.

In the cutting die according to the present aspect, each of the plurality of second cutting teeth is disposed between the corresponding one of the portions corresponding to the pair of first wing portions and the corresponding one of the portions corresponding to the pair of second wing portions in the corresponding one of the plurality of first cutting teeth, and each of the plurality of second cutting teeth shares the side with the portion corresponding to the strip portion in the corresponding one of the plurality of first cutting teeth. Thus, each of the plurality of second cutting teeth can be efficiently disposed using a region between the corresponding one of the pair of first wing portions and the corresponding one of the pair of second wing portions. Thus, the two types of insulations can be produced without waste of material.

In a cutting die according to still another aspect of the present disclosure, one of portions corresponding to the pair of first wing portions in one of the plurality of first cutting teeth is disposed between a corresponding one of portions corresponding to the pair of first wing portions and a corresponding one of portions corresponding to the pair of second wing portions in another of the plurality of first cutting teeth, and the one of the portions corresponding to the pair of first wing portions in the one of the plurality of first cutting teeth shares sides with the corresponding one of the portions corresponding to the pair of first wing portions and a portion corresponding to the strip portion in the other of the plurality of first cutting teeth, and one of the plurality of second cutting teeth is disposed between the one of the portions corresponding to the pair of first wing portions in the one of the plurality of first cutting teeth and the corresponding one of the portions corresponding to the pair of second wing portions in the other of the plurality of first cutting teeth, and the one of the plurality of second cutting teeth shares sides with a portion corresponding to the strip portion in the one of the plurality of first cutting teeth and the portion corresponding to the strip portion in the other of the plurality of first cutting teeth.

According to the cutting die of the present aspect, the plurality of first cutting teeth and the plurality of second cutting teeth can be efficiently disposed. Thus, the two types of insulations can be produced without waste of material.

In a cutting die according to still another aspect of the present disclosure, one of the plurality of first cutting teeth and another of the plurality of first cutting teeth are disposed in parallel in the intersecting direction, and one of the plurality of second cutting teeth is disposed between a corresponding one of portions corresponding to the pair of first wing portions and a corresponding one of portions corresponding to the pair of second wing portions in the one of the plurality of first cutting teeth or the other of the plurality of first cutting teeth, and the one of the plurality of second cutting teeth shares a side with the portion corresponding to the strip portion in the one of the plurality of first cutting teeth or the other of the plurality of first cutting teeth.

According to the cutting die of the present aspect, the plurality of first cutting teeth and the plurality of second cutting teeth can be efficiently disposed. Thus, the two types of insulations can be produced without waste of material.

In a cutting die according to still another aspect of the present disclosure, the portions corresponding to the pair of first wing portions in the one of the plurality of first cutting teeth and the portions corresponding to the pair of first wing portions in the other of the plurality of first cutting teeth are separated from each other by a distance equal to a width dimension of the strip portion in the intersecting direction, and the portions corresponding to the pair of second wing portions in the one of the plurality of first cutting teeth and the portions corresponding to the pair of second wing portions in the other of the plurality of first cutting teeth are separated from each other by the distance equal to the width dimension of the strip portion in the intersecting direction.

According to the cutting die of the present aspect, the plurality of first cutting teeth and the plurality of second cutting teeth can be efficiently disposed. Thus, the two types of insulations can be produced without waste of material.

In a cutting die according to still another aspect of the present disclosure, the portions corresponding to the pair of first wing portions in the one of the plurality of first cutting teeth share a side with the portions corresponding to the pair of first wing portions in the other of the plurality of first cutting teeth, and the portions corresponding to the pair of second wing portions in the one of the plurality of first cutting teeth share a side with the portions corresponding to the pair of second wing portions in the other of the plurality of first cutting teeth.

According to the cutting die of the present aspect, the plurality of first cutting teeth and the plurality of second cutting teeth can be efficiently disposed. Thus, the two types of insulations can be produced without waste of material.

A method for producing an insulation according to still another aspect of the present disclosure includes pressing the cutting die according to any of the above against a sheet-like insulation material (70).

The method for producing the insulation of the present aspect includes pressing the cutting die according to any of the above against the sheet-like insulation material. Thus, the insulation can be produced by a simple method.

### Reference Signs List

1 Vehicular air conditioning device
10 Casing
11 Air intake port
12 Air discharge port
20 Evaporator
21a Top surface
21b Side surface
21c Side surface
22 Pipe
30 First insulation (insulation)
31 Strip portion
31a One end
31b Another end
31c, 31d Long side
32 First wing portion
33 Second wing portion
40 Second insulation (another insulation)
41a One end
41b Another end
41c, 41d Long side
50 First cutting tooth
60 Second cutting tooth
70 Insulation material

## Claims

1. An insulation provided at an evaporator of a vehicular air conditioning device, the insulation comprising:
a strip portion having a rectangular shape and extending in a predetermined direction;
a pair of first wing portions, each of the pair of first wing portions having a rectangular shape and protruding in an intersecting direction orthogonal to the predetermined direction from a corresponding one of long sides of the strip portion at one end of the strip portion; and
a pair of second wing portions, each of the pair of second wing portions having a rectangular shape and protruding in the intersecting direction orthogonal to the predetermined direction from the corresponding one of the long sides of the strip portion at a position closer to another end of the strip portion than to the one end.

2. The insulation according to claim 1, wherein
a protruding length of one of the pair of first wing portions in the intersecting direction is set to be equal to a protruding length of another of the pair of first wing portions in the intersecting direction, and
a protruding length of one of the pair of second wing portions in the intersecting direction is set to be equal to a protruding length of another of the pair of second wing portions in the intersecting direction.

3. The insulation according to claim 2, wherein
a protruding length of each of the pair of first wing portions from the strip portion and a protruding length of each of the pair of second wing portions from the strip portion are set to be equal to a width dimension of the strip portion in the intersecting direction.

4. An evaporator structure comprising:
an evaporator including a top surface and a side surface adjacent to and orthogonal to the top surface; and
the insulation according to any of claims 1 to 3, wherein
the pair of first wing portions, the pair of second wing portions, and a portion of the strip portion from the pair of first wing portions to the pair of second wing portions are disposed at the top surface of the evaporator, and
a portion of the strip portion closer to the other end than the pair of second wing portions are to the other end is disposed at the side surface of the evaporator.

5. A cutting die comprising:
a plurality of first cutting teeth, each of the plurality of first cutting teeth following a contour of a shape obtained by integrating a strip portion, a pair of first wing portions, and a pair of second wing portions, the strip portion having a rectangular shape and extending in a predetermined direction, each of the pair of first wing portions having a rectangular shape and protruding in an intersecting direction orthogonal to the predetermined direction from a corresponding one of long sides of the strip portion at one end of the strip portion, each of the pair of second wing portions having a rectangular shape and protruding in the intersecting direction orthogonal to the predetermined direction from the corresponding one of the long sides of the rectangular shape at a position closer to another end of the strip portion than to the one end; and
a plurality of second cutting teeth, each of the plurality of second cutting teeth following a rectangular contour extending in the predetermined direction between a corresponding one of the pair of first wing portion and a corresponding one of the pair of the second wing portion.

6. The cutting die according to claim 5, wherein
each of the plurality of second cutting teeth is disposed between a corresponding one of portions corresponding to the pair of first wing portions and a corresponding one of portions corresponding to the pair of second wing portions in a corresponding one of the plurality of first cutting teeth, and
each of the plurality of second cutting teeth shares a side with a portion corresponding to the strip portion in the corresponding one of the plurality of first cutting teeth.

7. The cutting die according to claim 6, wherein
one of portions corresponding to the pair of first wing portions in one of the plurality of first cutting teeth is disposed between a corresponding one of portions corresponding to the pair of first wing portions and a corresponding one of portions corresponding to the pair of second wing portions in another of the plurality of first cutting teeth,
the one of the portions corresponding to the pair of first wing portions in the one of the plurality of first cutting teeth shares sides with the corresponding one of the portions corresponding to the pair of first wing portions and a portion corresponding to the strip portion in the other of the plurality of first cutting teeth,
one of the plurality of second cutting teeth is disposed between the one of the portions corresponding to the pair of first wing portions in the one of the plurality of first cutting teeth and the corresponding one of the portions corresponding to the pair of second wing portions in the other of the plurality of first cutting teeth, and
the one of the plurality of second cutting teeth shares sides with a portion corresponding to the strip portion in the one of the plurality of first cutting teeth and the portion corresponding to the strip portion in the other of the plurality of first cutting teeth.

8. The cutting die according to claim 6, wherein
one of the plurality of first cutting teeth and another of the plurality of first cutting teeth are disposed in parallel in the intersecting direction,
one of the plurality of second cutting teeth is disposed between a corresponding one of portions corresponding to the pair of first wing portions and a corresponding one of portions corresponding to the pair of second wing portions in the one of the plurality of first cutting teeth or the other of the plurality of first cutting teeth, and
the one of the plurality of second cutting teeth shares a side with the portion corresponding to the strip portion in the one of the plurality of first cutting teeth or the other of the plurality of first cutting teeth.

9. The cutting die according to claim 8, wherein
the portions corresponding to the pair of first wing portions in the one of the plurality of first cutting teeth and the portions corresponding to the pair of first wing portions in the other of the plurality of first cutting teeth are separated from each other by a distance equal to a width dimension of the strip portion in the intersecting direction, and
the portions corresponding to the pair of second wing portions in the one of the plurality of first cutting teeth and the portions corresponding to the pair of second wing portions in the other of the plurality of first cutting teeth are separated from each other by the distance equal to the width dimension of the strip portion in the intersecting direction.

10. The cutting die according to claim 8, wherein
the portions corresponding to the pair of first wing portions in the one of the plurality of first cutting teeth share a side with the portions corresponding to the pair of first wing portions in the other of the plurality of first cutting teeth, and
the portions corresponding to the pair of second wing portions in the one of the plurality of first cutting teeth share a side with the portions corresponding to the pair of second wing portions in the other of the plurality of first cutting teeth.

11. A method for producing an insulation, the method comprising:
pressing the cutting die according to any of claims 5 to 10 against a sheet-like insulation material.
